# EUROPÄISCHE PATENTSCHRIFT

(11) **EP 0 749 808 B1**
(45) Veröffentlichungstag und Bekanntmachung des Hinweises auf die Patenterteilung: **22.12.1999**
(21) Anmeldenummer: 96810286.3
(22) Anmeldetag: 06.05.1996
(51) Int. Cl.: B25B 23/04, B25C 1/00

(54) **Transportvorrichtung für ein streifenförmiges Schraubenmagazin**
Feed device for strips carrying screws
Dispositif de transport d'un magasin pour vis en forme de bande

(30) Priorität: 23.06.1995 DE 19522815
(43) Veröffentlichungstag der Anmeldung: 27.12.1996
(73) Patentinhaber: HILTI Aktiengesellschaft, 9494 Schaan (LI)
(72) Erfinder: Daubinger, Gerd, 80935 München (DE); Van Egeraat, Hendrik A., 70340 Örebro (SE)
(74) Vertreter: Wildi, Roland

(56) Entgegenhaltungen:
- DE-A- 2 444 457
- FR-A- 2 364 742
- US-A- 4 062 388

## Beschreibung

Die Erfindung betrifft eine Transportvorrichtung für ein streifenförmiges Schraubenmagazin mit einem Gehäuse, einem gegenüber dem Gehäuse parallel zur Schraubensetzrichtung, gegen die Kraft einer Feder versetzbaren Führungselement, einem gegenüber dem Führungselement parallel zur Schraubensetzrichtung versetzbaren Anschlagelement mit einer von der schraubensetzrichtungsseitigen Stirnseite gebildeten Anschlagfläche, und einem im wesentlichen senkrecht zur Schraubensetzrichtung verlaufenden Transportkanal für das Schraubenmagazin, wobei der Transportkanal von wenigstens einem entgegen der Schraubensetzrichtung weisenden Anschlagteil des Anschlagelementes und von der in Schraubensetzrichtung weisenden Stirnseite des Anschlagelementes gebildet ist.

Aus der EU-PS 0 593 970 ist in Verbindung mit einem Schraubgerät eine Transportvorrichtung für ein streifenförmiges Schraubenmagazin bekannt, das sich aus einem Gehäuse und einem gegenüber dem Gehäuse parallel zur Schraubensetzrichtung, gegen die Kraft einer Feder verstellbaren Führungselement und einem im wesentlichen rechtwinklig zur Schraubensetzrichtung gegen die Kraft eines Federelementes bewegbaren Schieber mit Transportklinke zusammensetzt. Das Gehäuse weist im Innern eine Steuerkurve auf, die mit einer am Schieber angeordneten Rolle zusammenwirkt, wenn das Gehäuse in Schraubensetzrichung relativ zum Führungselement bewegt wird. Der in Form eines zweiarmigen Hebels ausgebildete Schieber wird dabei um einen der an dem Führungselement angeordneten Drehpunkte verschwenkt. Dabei erfährt das freie Ende des Schiebers eine Schwenkbewegung, die ein gegenüber der Schraubensetzrichtung im wesentlichen rechtwinkliges Versetzen der an dem Schieber angeordneten, federbelasteten Transportklinke bewirkt, Nachdem die Transportklinke den Schaft einer Schraube hintergriffen hat, wird das streifenförmige Schraubenmagazin in Richtung Führungselement bewegt, wenn sich das Gehäuse entgegen der Schraubensetzrichung relativ zum Führungselement bewegt und der Schieber seine Ruhestellung wieder einnimmt. Der Transportweg des Schraubenmagazins entspricht dem Abstand zwischen zwei am Schraubenmagazin angeordneten Schrauben.

Das Vorspannen dieser bekannten Transportklinke ist nur möglich, wenn das Schraubenmagazin gegenüber dem Führungselement festgelegt wird, so dass sich das Schraubenmagazin nicht zusammen mit dem Schieber bewegt. Zu diesem Zweck werden bei dieser bekannten Transportvorrichtung streifenförmige Schraubenmagazine verwendet, deren Streifen auf den Längsseiten mit Vertiefungen versehen sind, die mit einer in dem Transportkanal angeordneten Sperrklinke zusammenwirken können. Wird ein derartiges Schraubenmagazin dem Transportkanal zugeführt, so wird diese Sperrklinke gegen die Kraft einer Feder nach aussen gedreht bis diese in eine entsprechende Vertiefung an der Längsseite des Schraubenmagazines einrücken kann. Da die Sperrklinke nur in einer Richtung drehbar ausgebildet ist, ergibt sich eine Sperre in der entgegengesetzten Richtung. Auf diese Weise wird das Schraubenmagazin gegenüber dem Führungselement festgelegt, wenn der Schieber bewegt und die Transportklinke vorgespannt wird.

Diese bekannte Sperrklinke mit dem entsprechenden Mechanismus ist kompliziert im Aufbau und nur mit grossem Aufwand montierbar, so dass die gesamte Transportvorrichtung nicht wirtschaftlich herstellbar ist. Ausserdem sind am Schraubenmagazin Vorkehrungen für den Eingriff der Sperrklinke zu treffen.

Eine weitere, mit einem Schraubgerät in Verbindung bringbare Transportvorrichtung für ein streifenförmiges Schraubenmagazin ist aus der den nächstliegenden Stand der Technik bildenden US-4 062 388 bekannt. Die Transportvorrichtung weist ein Gehäuse und ein teilweise in das Gehäuse ragendes Führungselement auf, das gegenüber dem Gehäuse entgegen der Schraubensetzrichtung gegen die Kraft einer Feder versetzbar ist. Ein gegenüber dem Gehäuse und dem Führungselement parallel zur Schraubensetzrichtung versetzbares Anschlagelement mit einer Anschlagfläche an einem schraubensetzrichtungsseitigen freien Ende überragt das Führungselement in Schraubensetzrichtung. Die Transportvorrichtung weist einen im wesentlichen senkrecht zur Schraubensetzrichtung verlaufenden Transportkanal für das Schraubenmagazin auf, der von einem entgegen der Schraubensetzrichtung weisenden Anschlagteil des Anschlagelementes und von der in Schraubensetzrichtung weisenden Stirnseite des Führungselementes gebildet ist. In diese bekannte Transportvorrichtung sind nur streifenförmige Schraubenmagazine mit Schrauben einheitlicher Länge einsetzbar.

Der Erfindung liegt die Aufgabe zugrunde, eine mit einem Schraubgerät in Verbindung bringbare Transportvorrichtung für ein streifenförmiges Schraubenmagazin zu schaffen, die wirtschaftlich herstellbar ist, die Verwendung einfach ausgebildeter Schraubenmagazine ermöglicht und für Reinigungs- und Wartungsarbeiten leicht demontierbar ist.

Erfindungsgemäss wird die Aufgabe dadurch gelöst, dass der Abstand zwischen der Stirnseite des Führungselementes und der Anschlagfläche des Anschlagelementes stufenweise verstellbar ist und dass das Anschlagelement mehrere axial hintereinander angeordnete, entgegen der Schraubensetzrichtung weisende Anschlagteile aufweist, die im Bereich von Durchgangsbohrungen liegen. Durch diese stufenweise Verstellbarkeit des Abstandes wird die Möglichkeit geschaffen Schrauben von unterschiedlicher Länge zu verarbeiten.

Beim Bewegen des Gehäuses in Schraubensetzrichtung relativ zum Anschlagelement wird auf diese Weise das in dem Transportkanal angeordnete, streifenförmige Schraubenmagazin festgeklemmt, so dass eine Versetzung des Schraubenmagazin während der Bewegung des Schiebers verhindert wird. Die Herstellung einer Transportvorrichtung ist aufgrund der einfach ausgebildeten Einzelteile wirtschaftlich.

Der Transportkanal wird von entgegen der Schraubensetzrichtung weisenden Anschlagteilen des Anschlagelementes und von der in Schraubensetzrichtung weisenden Stirnseite des Führungselementes gebildet. Der lichte Querschnitt der Durchgangsbohrung entspricht zumindest dem Querschnitt des Schraubenmagazins.

Ein gutes Festklemmen des Schraubenmagazins zwischen dem Anschlagelement und dem Führungselement wird vorzugsweise dadurch erreicht, dass an dem Anschlagelement ein mit der Stirnseite des Führungselementes zusammenwirkendes Klemmelement stufenweise axial festlegbar ist. Das Klemmelement ist beispielsweise im Innern des Anschlagelementes angeordnet und mittels eines Befestigungselementes beispielsweise in Form einer Schraube fest mit dem Anschlagelement verbunden.

Aus funktionstechnischen Gründen ist zweckmässigerweise zwischen dem Führungselement und dem Anschlagelement ein Federelement angeordnet.

Die Erfindung wird anhand eines Ausführungsbeispieles näher erläutert.

Die dargestellte Transportvorrichtung ist mit dem schraubensetzrichtungsseitigen Bereich eines nicht näher dargestellten Schraubgerätes verbunden und setzt sich im wesentlichen aus einem Gehäuse 1, einem Führungselement 2, einer Feder 4, einer an dem Führungselement 2 angeordneten Transportschiene 5, einem Schieber 6, einer federbelasteten Transportklinke 7 und einem Anschlagelement 8 zusammen:

In dem Gehäuse 1 befindet sich das Führungselement 2, das das schraubensetzrichtungsseitige, freie Ende des Gehäuses 1 überragt. Das Führungselement 2 ist gegen die Kraft der zwischen dem Gehäuse 1 und dem Führungselement 2 angeordneten Feder 4 axial verzetzbar. Von dem Führungselement 2 ragt rechtwinklig eine Transportschiene 5 ab, entlang der ein Schieber 6 gegen die Kraft eines Federelementes 9 versetzbar ist.

Die Versetzung dieses Schiebers 6 erfolgt in Abhängigkeit der Lage des Führungselementes 2 gegenüber dem Gehäuse 1. An der schraubensetzrichtungsseitigen Stirnseite des Gehäuses 1 ist eine sich in Schraubensetzrichtung verjüngende Steuerkurve in Form einer geneigten Fläche 10 angeordnet, die mit einer entsprechend geneigten Gegenfläche 11 an dem Schieber 6 zusammenwirkt. Während des Setzvorganges einer Schraube 12 wird das Gehäuse 1 relativ gegenüber dem Führungselement 2 in Schraubensetzrichtung bewegt. Die am Gehäuse 1 angeordnete, geneigte Fläche 10 gleitet an der entsprechenden Gegenfläche 11 des Schiebers 6 entlang und verschiebt diesen rechtwinklig zur Schraubensetzrichtung nach aussen.

Eine an dem Schieber 6 angeordnete federbelastete Transportklinke 7 wird beim Versetzen gegenüber einer Schraube 12 vorgespannt und hintergreift diese, sobald die Transportklinke 7 an dem Schaft der Schraube 12 nicht mehr anliegt.

Diese Transportklinke 7 weist Angriffmittel in Form eines Flügels 22 auf, der das manuelle Erfassen und somit das Verschwenken der Transportklinke 7 ermöglicht.

Das Vorspannen dieser Transportklinke 7 ist nur dann möglich, wenn der Streifen 13 des Schraubenmagazins 3 gegenüber dem Führungselement 2 festgelegt werden kann, so dass sich der Streifen 13 nicht zusammen mit dem Schieber 6 bewegt. Zu diesem Zweck befindet sich an dem Führungselement 2 ein hülsenförmiges Anschlagelement 8 mit einer schraubensetzrichtungsseitigen Anschlagfläche 14, mehreren rechtwinklig zur Schraubensetzrichtung verlaufenden, axial hintereinander angeordneten Anschlagteilen 17 und mit einem axial festgelegten Klemmelement 24. Das Klemmelement 24 ist gegenüber dem Anschlagelement 8 derart festlegbar, dass die entgegen der Schraubensetzrichtung weisende Oberfläche des Klemmelementes 24 jeweils in der gleichen Ebene wie entgegen der Schraubensetzrichtung weisende Anschlagteile 17 des Anschlagelementes 8 die im Bereich der Durchgangsbohrungen 25 liegen.

Das Anschlagelement 8 umgibt das Führungselement 2 wenigstens teilweise und ist gegenüber dem Anschlagelement 8 axial versetzbar und an dem Führungselement 2 mittels eines in eine Bohrung 18 ragenden Befestigungselementes 20 in Form einer Schraube festgelegt. Der Abstand A zwischen der Stirnseite 16 des Führungselementes 2 und der Anschlagfläche (14) des Anschlagelementes 8 ist stufenweise verstellbar. Das Befestigungselement 20 durchsetzt ein parallel zur Schraubensetzrichtung verlaufendes, am Anschlagelement 8 angeordnetes Langloch 19, dessen Breite geringfügig grösser ist als der Schaftdurchmesser des Befestigungselementes 20. Auf der dem Langloch 19 gegenüberliegenden Seite besitzt das Anschlagelement 8 einen sich wenigstens teilweise über die gesamte Länge des Anschlagelementes 8 verlaufenden Schlitz 27, der das Zuführen jeweils einer Schraube 12 in das Innere des Anschlagelementes 8 ermöglicht.

Die schraubensetzrichtungsseitige Stirnseite 16 des Führungselementes 2 und entgegen der Schraubensetzrichtung verlaufende Anschlagteile 17 des an dem Anschlagelement 8 angeordneten Führungskanals 15 bewegen sich beim Anpressen der Transportvorrichtung gegen die Oberfläche O eines zu befestigenden Untergrundes U zueinander und verklemmen den dazwischen liegenden Streifen 13 des Schraubenmagazins 3. Nach dem Eindrehen einer Schraube 12 mittels einer Schrauberklinge 23 wird die Schraubvorrichtung vom Untergrund U abgehoben, so dass sich das Anschlagelement 8 mit Hilfe eines Federelementes 26 gegenüber dem Führungselement 2 wiederum in Schraubensetzrichtung bewegt. Gleichzeitig mit der Versetzung des Anschlagelementes 8 erfolgt auch eine Versetzung des Gehäuses 1 gegenüber dem Führungselement 2 und des über die geneigte Fläche 10 und die Gegenfläche 11 vorgespannten Schiebers 6 zusammen mit den in dem Schraubenmagazin 3 gehalterten Schrauben 12.

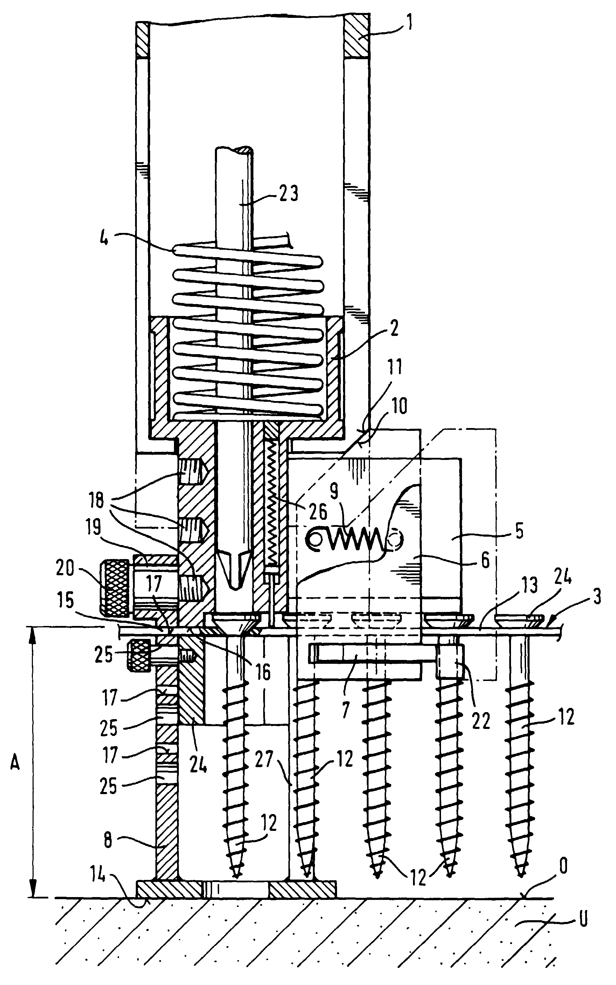

## Patentansprüche

1. Transportvorrichtung für ein streifenförmiges Schraubenmagazin (3) mit einem Gehäuse (1), einem gegenüber dem Gehäuse (1) parallel zur Schraubensetzrichtung, gegen die Kraft einer Feder (4) versetzbaren Führungselement (2), einem gegenüber dem Führungselement (2) parallel zur Schraubensetzrichtung versetzbaren Anschlagelement (8) mit einer von der schraubensetzrichtungsseitigen Stirnseite gebildeten Anschlagfläche (14), und einem im wesentlichen senkrecht zur Schraubensetzrichtung verlaufenden Transportkanal (15) für das Schraubenmagazin (3), wobei der Transportkanal (15) von wenigstens einem entgegen der Schraubensetzrichtung weisenden Anschlagteil (17) des Anschlagelementes (8) und von der in Schraubensetzrichtung weisenden Stirnseite (16) des Anschlagelementes (8) gebildet ist**, dadurch gekennzeichnet**, dass der Abstand (A) zwischen der Stirnseite (16) des Führungselementes (2) und der Anschlagfläche (14) des Anschlagelementes (8) stufenweise verstellbar ist und dass das Anschlagelement (8) mehrere axial hintereinander angeordnete, entgegen der Schraubensetzrichtung weisende Anschlagteile (17) aufweist, die im Bereich von Durchgangsbohrungen (25) liegen.

2. Vorrichtung nach Anspruch 1, dadurch gekennzeichnet, dass an dem Anschlagelement (8) ein mit der Stirnseite (16) des Führungselementes (2) zusammenwirkendes Klemmelement (24) stufenweise axial festlegbar ist.

3. Vorrichtung nach Anspruch 1 oder 2, dadurch gekennzeichnet, dass zwischen dem Führungselement 82) und dem Anschlagelement (8) ein Federelement (26) angeordnet ist.

## Claims

1. Transport device or a stripshaped screw magazine (3) comprising a housing (1), a guide element (2) which is offsetable relative to the housing (1) parallel to the setting direction of the screws and against the force of a spring (4), a stop element (8) which is offsetable relative to the guide element (2) parallel to the setting direction of the screws and with a stop surface (14) formed by the end surface as seen in the setting direction of the screws, and a transport channel (15) for the screw magazine (3) which extends essentially perpendicularly to the screw setting direction, and the transport channel (15) is formed by at least one stop part (17) of the stop element (8) facing against the screw setting direction and by the end surface (16) of the stop element (8) facing in the screw setting direction, **characterised in that** the distance (A) between the end surface (16) of the guide element (2) and the stop surface (14) of the stop element (8) is adjustable in steps, and the stop element (8) comprises a plurality of stop parts (17) arranged axially one behind the other and facing against the screw setting direction and which lie in the area of throughbores (25).

2. Device according to Claim 1, **characterised in that** a clamping element (24) which co-acts with the end surface (16) of the guide element (2) can be axially fixed in steps on the stop element (8).

3. Device according to Claim 1 or 2, **characterised in that** a spring element (26) is arranged between the guide element (2) and the stop element (8).

## Revendications

1. Dispositif de transport pour un magasin de vis en forme de bande (3), comprenant un carter (1), un élément de guidage (2) apte à être déplacé par rapport au carter (1) à l'encontre de la force d'un ressort (4) parallèlement au sens d'enfoncement des vis, un élément de butée (8) apte à être déplacé par rapport à l'élément de guidage (2) parallèlement au sens d'enfoncement des vis et pourvu d'une surface de butée (14) formée par la face frontale orientée dans le sens d'enfoncement des vis, et, pour le magasin de vis (3), un canal de transport (15) s'étendant sensiblement perpendiculairement au sens d'enfoncement des vis, le canal de transport (15) étant formé par au moins une partie de butée (17) de l'élément de butée (8) orientée à l'opposé du sens d'enfoncement des vis et par la face frontale (16) de l'élément de butée (8) orientée dans le sens d'enfoncement des vis, caractérisé en ce que la distance (A) entre la face frontale (16) de l'élément de guidage (2) et la surface de butée (14) de l'élément de butée (8) est réglable progressivement, et en ce que l'élément de butée (8) comporte plusieurs parties de butée (17) qui sont disposées les unes derrière les autres dans le sens axial et orientées à l'opposé du sens d'enfoncement des vis et qui se trouvent dans la zone de trous débouchants (25).

2. Dispositif selon la revendication 1, caractérisé en ce qu'un élément de serrage (24) coopérant avec la face frontale (16) de l'élément de guidage (2) peut être réglé progressivement dans le sens axial contre l'élément de butée (8).

3. Dispositif selon la revendication 1 ou 2, caractérisé en ce qu'un élément élastique (26) est disposé entre l'élément de guidage (2) et l'élément de butée (8).
